# EUROPÄISCHE PATENTANMELDUNG

(11) **EP 4 528 317 A1**
(43) Veröffentlichungstag der Anmeldung: **26.03.2025**
(21) Anmeldenummer: 24177073.4
(22) Anmeldetag: 21.05.2024
(51) Int. Cl.: G01S 7/40, B60R 25/20, E05F 15/73, G01S 7/41, G01S 13/04, G01S 13/56, G01S 13/88

(54) **STEUERUNGSSYSTEM ZUM BERÜHRUNGSLOSEN VERSTELLEN EINER FAHRZEUGKLAPPE ODER FAHRZEUGTÜR EINES KRAFTFAHRZEUGS, VERFAHREN ZUM BERÜHRUNGSLOSEN VERSTELLEN EINER FAHRZEUGKLAPPE ODER FAHRZEUGTÜR EINES KRAFTFAHRZEUGS UND KRAFTFAHRZEUG**

(30) Priorität: 19.09.2023 DE 102023125934
(71) Anmelder: Huf Hülsbeck & Fürst GmbH & Co. KG, 42551 Velbert (DE)
(72) Erfinder: WEHNER, Philipp, 45879 Gelsenkirchen (DE); SCHINDLER, Mirko, 42549 Velbert (DE); LEIB, Steffen, 40885 Ratingen (DE)
(74) Vertreter: Zenz Patentanwälte Partnerschaft mbB

(57) **Zusammenfassung**

Die Erfindung betrifft ein Steuerungssystem (1) zum berührungslosen Verstellen einer Fahrzeugklappe (2) oder Fahrzeugtür (3) eines Kraftfahrzeugs (4). Das Steuerungssystem (1) weist einen Elektromotor (5) und eine Radarsensoranordnung (6) mit einem Radarsensor (6a) und einer Auswerteeinheit (6b) zur Erfassung von Objekten auf, zudem eine Steuereinrichtung (9), die ausgebildet ist, in Abhängigkeit von einer innerhalb eines Gestenerfassungsraums (7) erfassten Steuergeste das Verstellen der Fahrzeugklappe (2) beziehungsweise Fahrzeugtür (3) zu veranlassen.

Eine Aktivschaltung aus dem Energiesparmodus erfolgt in Abhängigkeit von aus einem Groberfassungsraum (8) heraus erfassten Radarantworten.

Die Erfindung betrifft ferner ein Verfahren zum berührungslosen Verstellen einer Fahrzeugklappe oder Fahrzeugtür eines Kraftfahrzeugs sowie ein Kraftfahrzeug.

## Beschreibung

Die Erfindung betrifft ein Steuerungssystem zum berührungslosen Verstellen einer Fahrzeugklappe oder Fahrzeugtür eines Kraftfahrzeugs, ein Verfahren zum berührungslosen Verstellen einer Fahrzeugklappe oder Fahrzeugtür eines Kraftfahrzeugs sowie ein Kraftfahrzeug. Ein für das berührungslose Verstellen erforderliches Erkennen eines Objekts wird im Rahmen der vorliegenden Entwicklung unter Nutzung von einer oder mehreren Radarsensoranordnungen auf Basis der Radartechnologie realisiert.

Die Radartechnologie ist seit dem frühen 20. Jahrhundert bekannt. Sie beruht auf dem Prinzip, elektromagnetische Wellen auszusenden, das Echo der ausgesendeten elektromagnetischen Wellen zu empfangen, und das empfangene Signal bedarfsweise nach verschiedenen Kriterien auszuwerten. Je nach konkreter Umsetzung können verschiedene Informationen über die Objekte gewonnen werden, welche für das Zurückwerfen des Echos ursächlich sind. Beispielsweise kann mit der Radartechnologie eine Ortung erfolgen. Weiterhin können, beispielsweise unter Ausnutzung des Doppler-Effekts, Informationen über die Relativbewegung zwischen Sender und Objekt, über die absolute Geschwindigkeit eines der beiden oder, je nach Ausführung, alternativ oder zusätzlich über Konturen des Objekts gewonnen werden.

In der Automobiltechnologie gewinnt die Nutzung von Radar zunehmend an Bedeutung. Ein Hintergrund hierfür ist der Wunsch, die Autonomie von Fahrzeugen zu erhöhen, wodurch die Weiterentwicklung der in Fahrzeugen genutzten Sensoren getrieben wurde.

Inzwischen werden Radarsensoranordnungen zur Ausrüstung beispielsweise von Fahrzeugen als zum Einbau bereite Zukaufsysteme angeboten, die ein hohes Maß an Reichweite sowie lateraler Auflösung in der Objekterkennung bereitstellen. Entsprechende einbaubereite Radarsensoranordnungen sind inzwischen zu Kosten zu erhalten, die eine serienmäßige Nutzung für verschiedene Anwendungen erlauben und attraktiv gemacht haben.

Aus verschiedenen Gründen, nicht zuletzt regulatorischer Art, können diese beispielsweise im Frequenzbereich zwischen 24 GHz und 81 GHz betrieben werden, wobei im Bereich zwischen 77 GHz und 81 GHz betriebene Radarsensoren eine häufig genutzte Variante sind. Die genannten Frequenzbereiche werden aufgrund der Wellenlänge der ausgesandten elektromagnetischen Wellen im englischen gelegentlich auch als *mmWave* referenziert.

Die Nutzung von Radarsensoren hat den Vorteil, dass aufgrund des grundsätzlichen Funktionsprinzips, ein Echo elektromagnetischer Wellen zur Informationsgewinnung zu nutzen, Informationen erhalten werden können, die über die Ergebnisse hinausgehen, die mit Ultraschallsensoren gewonnen werden können; gegenüber der Nutzung von Lidarsystemen wiederum haben Radarsensoren den Vorteil, dass die Beschaffung von Radarsensoren mit geringeren Kosten einhergeht.

Mit der zunehmenden Anordnung einer hohen Zahl von Sensoren, beispielsweise an Kraftfahrzeugen, gewinnt die grundsätzliche Anforderung an Bedeutung, einen möglichst langen Betrieb der Sensoren zu gewährleisten. In diesem Zusammenhang wird angestrebt, den Elektrizitätsbedarf der vorhandenen Radarsensoranordnungen möglichst gering zu halten, ohne dabei jedoch die Funktionalität zu beeinträchtigen oder zumindest, ohne sie über ein akzeptables Maß hinaus zu beeinträchtigen.

Die Aufgabe wird mit einem Steuerungssystem zum berührungslosen Verstellen einer Fahrzeugklappe oder einer Fahrzeugtür eines Kraftfahrzeugs mit den Merkmalen des Anspruchs 1, mit einem Verfahren zum berührungslosen Verstellen einer Fahrzeugklappe oder Fahrzeugtür eines Kraftfahrzeugs mit den Merkmalen des Anspruchs 15, sowie mit einem Kraftfahrzeug mit den Merkmalen des Anspruchs 18 gelöst.

Es ist ein Steuerungssystem zum berührungslosen Verstellen einer Fahrzeugklappe oder Fahrzeugtür eines Kraftfahrzeugs vorgesehen.

Das Steuerungssystem weist einen mit der Fahrzeugklappe beziehungsweise Fahrzeugtür gekoppelten Elektromotor auf.

Ferner ist am Fahrzeug eine Radarsensoranordnung angeordnet zur Erfassung von Objekten. Es kann sich beispielsweise um eine im Frequenzbereich um 24 Ghz, beispielsweise zwischen 23 und 25 GHz, oder im Frequenzbereich um 60 GHz, beispielsweise zwischen 59 und 61 GHz, oder im Frequenzbereich zwischen 77 GHz und 81 GHz arbeitende zur Gestenerkennung geeigneten Radarsensoranordnung handeln.

Die Radarsensoranordnung kann beispielsweise ein Radarsensor sein, wie er als kompaktes Modul einbaubereit marktverfügbar ist.

Alternativ kann die Radarsensoranordnung eine als Modul bereitgestellte Einheit aus einem Radarsensor und einer Auswerteeinheit sein, die beispielsweise als Mikrocontroller ausgebildet ist.

Alternativ kann die Radarsensoranordnung auch als eine Kopplung oder eine Einheit aus zwei oder mehr Radarsensoren ausgebildet sein, insbesondere mit einer eigenen Auswerteeinheit oder alternativ als Einheit aus zwei oder mehr Radarsensoren beispielsweise zur Ankopplung an eine übergeordnete Auswerteeinheit.

Es kann sich bei der Radarsensoranordnung beispielsweise um ein Modul handeln, das insbesondere als marktübliches Zukaufteil verfügbar ist.

Mit der Radarsensoranordnung und dem Elektromotor gekoppelt ist eine Steuereinrichtung, die ausgebildet ist, in Abhängigkeit von einer innerhalb eines Gestenerfassungsraums ausgeführten und von der Radarsensoranordnung in einem Gestenerfassungsmodus erfassten Steuergeste das Verstellen der Fahrzeugklappe beziehungsweise Fahrzeugtür mittels des Elektromotors zu veranlassen.

Wenn die Radarsensoranordnung beispielsweise ein Radarsensor ist, wie er als kompaktes Modul einbaubereit marktverfügbar ist, kann die Auswertung der Steuergeste beispielsweise in einer fahrzeugseitigen Steuerungsvorrichtung, beispielsweise einem zentralen Steuergerät oder der oben genannten Steuereinrichtung erfolgen.

Wenn die Radarsensoranordnung eine als Modul bereitgestellte Einheit aus einem Radarsensor und einer Auswerteeinheit ist, die beispielsweise als Mikrocontroller ausgebildet ist, kann die Auswertung der Steuergeste beispielsweise in dem Mikrocontroller erfolgen.

Wenn die Radarsensoranordnung alternativ als eine Kopplung oder eine Einheit aus zwei oder mehr Radarsensoren ausgebildet ist, insbesondere mit einer eigenen Auswerteeinheit, kann die Auswertung der Steuergeste in dieser Auswerteeinheit erfolgen. Wenn die Radarsensoranordnung alternativ als Einheit aus zwei oder mehr Radarsensoren zur Ankopplung an eine übergeordnete Auswerteeinheit ausgebildet ist, kann die Auswertung der Steuergeste in der übergeordneten Auswerteeinheit erfolgen, beispielsweise einem zentralen Steuergerät des Fahrzeugs.

Erfindungsgemäß ist vorgesehen, dass die Radarsensoranordnung wenigstens zwei Betriebsmodi einnehmen kann, nämlich den Gestenerfassungsmodus sowie einen Energiesparmodus. Der Energiesparmodus ist ein Modus, der gegenüber dem Gestenerfassungsmodus einen reduzierten Energieverbrauch durch die Radarsensoranordnung aufweist. Realisiert wird dies durch Inkaufnahme von einer Reduktion beispielsweise von örtlicher und/oder zeitlicher Auflösung der Radarfassung. Beispielsweise kann vorgesehen sein, dass die Radarsensoranordnung ein Radarsensor ist oder einen Radarsensor aufweist, der eine Mehrzahl von Sendeantennen sowie eine Mehrzahl von Empfangsantennen aufweist, wobei der Energiesparmodus die Maßnahme vorsieht, dass im Unterschied zu dem Gestenerfassungsmodus nur eine Untermenge der vorhandenen Sendeantennen und/oder eine Untermenge der vorhandenen Empfangsantennen angesteuert wird, was mit dem angestrebten reduzierten Energieverbrauch einhergeht.

Erfindungsgemäß ist die Radarsensoranordnung eingerichtet, in Abhängigkeit von im Energiesparmodus aus einem Groberfassungsraum heraus erfassten Radarantworten, also eine Radarantwort die sich aus der Reflektion ausgesendeter Radarsignale in dem Groberfassungsraum zurück zu der Radarsensorantworten ergibt, aus dem Energiesparmodus heraus in den Gestenerfassungsmodus hinein zu schalten. Die erfindungsgemäße Ausbildung der Radarsensoranordnung sieht also vor, in zwei Betriebsmodi zwei unterschiedliche Arten der Erkennung vorzusehen, nämlich die Gestenerkennung in dem regulären Modus sowie eine gegenüber der Gestenerkennung, beispielsweise hinsichtlich zeitlicher und/oder örtlicher Auflösung, weniger anspruchsvolle Erfassung, die insbesondere mit einem geringeren Energiebedarf einhergeht und dadurch als Energiesparmodus geeignet ist. In dem oben genannten Beispiel, gemäß welchem nur eine Untermenge der vorhandenen Sendeantennen und/oder eine Untermenge der vorhandenen Empfangsantennen zur Objekterkennung angesteuert wird, ist die im Gestenerfassungsmodus erfolgende Gestenerkennung nicht mehr oder nur mit geringerer Genauigkeit möglich; die Radarsensoranordnung erhält jedoch beispielsweise bei Eintritt eines Objekts in den Groberfassungsraum eine gegenüber einem objektlosen Groberfassungsraum veränderte Radarantwort und kann aus dieser auf den Eintritt eines Objekts in den Groberfassungsraum hinein schließen.

Es kann also insbesondere vorgesehen sein, dass die Aktivschaltung der Radarsensoranordnung erfolgt nach Detektion einer Annäherung eines Objekts in den Groberfassungsraum hinein, wobei die Detektion der Annäherung notwendige, in Ausführung auch hinreichende - Bedingung für Aktivschaltung der Radarsensoranordnung sein kann. Die Abhängigkeit von im Energiesparmodus aus einem Groberfassungsraum heraus erfassten Radarantworten besteht also darin, dass die Detektion einer Annäherung eines Objekts in den Groberfassungsraum hinein erfolgt, wobei die Detektion der Annäherung notwendige, in Ausführung auch hinreichende - Bedingung für Aktivschaltung der Radarsensoranordnung sein kann. Mit dieser Ausführung hat das Steuerungssystem den Vorteil, dass auch im Energiesparmodus der Radarsensoranordnung Momente identifiziert werden, in denen die Wahrscheinlichkeit steigt, dass ein Bediener sich im Umfeld des Radarsensor befindet und eine Steuergeste auszuführen plant, sodass ein Eintritt in den Gestenerfassungsmodus als gewährleistet angesehen werden kann.

Je nach gegenwärtiger Einsatzsituation eines Fahrzeugs ist die Aktivschaltung in den Gestenerfassungsmodus in Abhängigkeit von im Groberfassungsmodus erfassten Radarantworten mit unterschiedlich großer Zuverlässigkeit möglich. Beispielsweise können Situationen vorkommen, in denen sehr häufig eine Annäherung eines Objekts in den Groberfassungsraum erkannt wird, jedoch es sich aufgrund der konkret vorliegenden Situation - im Gegensatz zu der oben beschriebenen Annahme - um eine Sondersituation handelt, in der auf die erkannte Annäherung eines Objekts hin keine Bediensituation erfolgen soll, weswegen auch keine Gestenerkennung einer Steuergeste erforderlich ist. Es handelt sich um Situationen, in denen häufig Objekte in den Groberfassungsraum des Fahrzeugs eintreten, bei denen es sich nicht um den regulären Bediener des Fahrzeugs handelt.

Ein Beispiel für eine solche Situation ist ein Kraftfahrzeug, welches in einer dichten Menschenmenge geparkt ist. Die dichte Menschenmenge würde in häufiger Folge eine Detektion einer Annäherung eines Objekts, also insbesondere eines Menschen, in den Groberfassungsraum hinein verzeichnen; anders als in regulär zu erwartenden Konstellationen resultiert jedoch ein überwiegender Teil dieser Annäherungen einem zufälligen Passieren von Personen, ohne dass diese ein Ausüben einer Steuergeste, beispielsweise zum Verstellen einer Fahrzeugklappe oder Fahrzeugtür, zur Folge haben würde. Es würde also in vielen Fällen eine Aktivschaltung der Radarsensoranordnung erfolgen, ohne dass die Erkennung einer Steuergeste erforderlich ist; es handelt sich also um eine Fehlauslösung der Aktivschaltung der Radarsensoranordnung. Die Fehlauslösung der Aktivschaltung der Radarsensoranordnung ist eine Aktivschaltung der Radarsensoranordnung, welcher keine Gestenerfassung folgt, in Ausführung keine Gestenerfassung in einem Zeitraum von beispielsweise 30 bis 120 Sekunden nach der Aktivschaltung folgt.

Dadurch, dass in einer Weiterbildung die Aktivschaltung der Radarsensoranordnung erst nach Detektion einer Mindestanzahl von erkannten Annäherungen vorgesehen ist, in einer Variante erst nach Detektion einer Mindestanzahl von erkannten Annäherungen in einer vorgegebenen Zeitperiode, insbesondere einer gleitenden Zeitperiode, wird die Anzahl von zufälligen Fehlauslösungen reduziert. Dies erfolgt unter Inkaufnahme des geringfügigen Nachteils für den Bediener, der eine Steuergeste ausüben möchte, dass er über einen längeren Zeitraum mehrere Annäherungen vornehmen muss, sie also gegebenenfalls wiederholen muss.

Besonders bevorzugt ist eine Weiterbildung, die vorsieht, dass die Mindestanzahl von erkannten Annäherungen veränderlich ist. Mit einer veränderlichen Mindestanzahl von erkannten Annäherungen, welche für eine Aktivschaltung vorausgesetzt werden, ist es der Radarsensoranordnung möglich, einen Trade-Off zwischen möglichst hoher Empfindlichkeit einerseits und möglichst geringer Anzahl von Fehlauslösungen andererseits in Abhängigkeit von einer gegenwärtigen Positionierung des Fahrzeugs oder des Umfelds des Fahrzeugs anzupassen.

Es kann in einer weitergebildeten Ausführungsvariante beispielsweise vorgesehen sein, dass die Radarsensoranordnung ausgebildet ist, die Mindestanzahl von erkannten Annäherungen zu erhöhen, wenn die Anzahl von Fehlauslösungen der Aktivschaltung in einer vorgegebenen Zeitdauer einen Fehlauslösungsschwellwert überschreitet. Es kann also während einer vorgegebenen, insbesondere gleitenden, Zeitdauer, beispielsweise einer Zeitdauer zwischen 5 Minuten und 30 Minuten, die Anzahl der Fehlauslösungen, also Aktivschaltungen ohne innerhalb vorgegebenen Nachfolgezeitraums von beispielsweise 30 bis 120 Sekunden folgender Erfassung einer Steuergeste, verzeichnet werden, und dann, wenn die Anzahl der Fehlauslösungen einen vorgegebenen Fehlauslösungsschwellwert überschreitet, eine Anpassung der Mindestanzahl von erkannten Annäherungen hin zu einer erhöhten Mindestanzahl vorgenommen werden.

Insbesondere kann die Radarsensoranordnung ausgebildet ist, die Mindestanzahl von erkannten Annäherungen in vorgegebenen Stufen stufenweise zu erhöhen, wenn in einer jeweiligen Stufe die Anzahl von Fehlauslösungen der Aktivschaltung in einer vorgegebenen Zeitdauer einen Fehlauslösungsschwellwert überschreitet. Mit dem Vorsehen von mehreren Stufen eines Erhöhens der Mindestanzahl kann die Anpassung der Radarsensoranordnung an unterschiedlich stark ausgeprägte, Fehlauslösungen begünstigende, Situationen vorgenommen werden, ohne dass andererseits die erforderliche Empfindlichkeit der Radarsensoranordnung gleich in einem ersten Anpassungsschritt zu stark eingeschränkt wird.

Weiterhin kann beispielsweise vorgesehen sein, dass die Radarsensoranordnung ausgebildet ist, die Mindestanzahl von erkannten Annäherungen wieder auf ihren Grundwert zurückzusetzen, wenn für einen vorgegebenen erkennungslosen Zeitraum eine Anzahl von erkannten Annäherungen einen vorgegebenen Marginalwert nicht überschreitet. Das bedeutet, dass nach einem längeren Zeitraum ohne erkannte Annäherung eines Objekts die Mindestanzahl wieder auf ihren ursprünglich vorgesehenen Grundwert zurückgesetzt wird. Dieses Vorgehen hat den Vorteil, dass im Falle von nur vorübergehenden Fehlauslösungen begünstigenden Situationen nach dem Ende dieser Situation wieder die Wiederherstellung des ursprünglichen Verhaltens mit höherer Erkennungssicherheit sichergestellt ist.

Alternativ kann auch vorgesehen sein, dass oder dass die Radarsensoranordnung ausgebildet ist, die Mindestanzahl von erkannten Annäherungen in vorgegebenen Stufen stufenweise zu reduzieren, wenn in einer jeweiligen Stufe für einen vorgegebenen erkennungslosen Zeitraum eine Anzahl von erkannten Annäherungen Null nicht überschreitet oder einen vorgegebenen Marginalwert nicht überschreitet. Dies hat gegenüber dem sofortigen Rücksetzen auf den Grundzustand den Vorteil eines stabileren Verhaltens und erlaubt beispielsweise die Wahl von weniger langen vorgegebenen erkennungslosen Zeiträumen.

In einer weiteren Weiterbildung des Radarsensorsystems kann alternativ oder zusätzlich vorgesehen sein, dass die Radarsensoranordnung ausgebildet ist, die Aktivschaltung der Radarsensoranordnung erst nach Detektion eines Annäherungsparameters oberhalb eines Annäherungsparameterschwellwerts vorzunehmen. Die Abhängigkeit von im Energiesparmodus aus einem Groberfassungsraum heraus erfassten Radarantworten besteht also darin, dass die Aktivschaltung der Radarsensoranordnung erst erfolgt, wenn detektiert wurde, dass ein überwachter Annäherungsparameter einen vorgegebenen Schwellwert, nämlich den Annäherungsparameterschwellwert, überschritten hat. Dieser Annäherungsparameter kann ein beliebiger von der Annäherung eines Objekts, also eines potentiellen Bedieners, abhängiger Wert sein. Beispielsweise kann es sich bei dem Annäherungsparameter handeln um:
- eine Annäherungssignalstärke, insbesondere eine von einer Empfangsantenne der Radarsensoranordnung empfangene Empfangssignalstärke einer Radarantwort, oder
- eine Zeitdauer einer
   Annäherungssignalstärkenschwellwertüberschreitung, oder
- einen von der Annäherungssignalstärke und/oder der Zeitdauer der
   Annäherungssignalstärkenschwellwertüberschreitung abhängiger Zusammenhang.

Das bedeutet beispielsweise, dass die Aktivschaltung der Radarsensoranordnung erfolgt, wenn die Annäherungssignalstärke einen bestimmten Schwellwert überschritten hat. Alternativ bedeutet es beispielsweise, dass die Aktivschaltung der Radarsensoranordnung erfolgt, wenn die Annäherungssignalstärke einen bestimmten Schwellwert für einen Zeitraum überschritten hat, der wenigstens eine Länge eines vorgegebenen Mindestzeitraum erreicht oder überschritten hat. Auch komplexere Zusammenhänge aus der Annäherungssignalstärke und der Zeitdauer der Annäherungssignalstärkenschwellwertüberschreitung können als - notwendige, in Ausführung auch hinreichende - Voraussetzung für die Aktivschaltung in den Aktivmodus vorgesehen sein.

Insbesondere kann vorgesehen sein, dass der Annäherungsparameterschwellwert veränderlich ist.

Gemäß einer vorteilhaften Weiterbildung ist die Radarsensoranordnung ausgebildet, den Annäherungsparameterschwellwert zu erhöhen, wenn die Anzahl von Fehlauslösungen der Aktivschaltung in einer vorgegebenen Zeitdauer einen Fehlauslösungsschwellwert überschreitet. Ähnlich wie oben bereits im Zusammenhang mit der Mindestzahl von erkannten Annäherungen erläutert, kann in dieser Konfiguration eine flexible Anpassung an veränderte Standortsituationen erfolgen.

Gemäß einer vorteilhaften Weiterbildung ist die Radarsensoranordnung ausgebildet, den Annäherungsparameterschwellwert in vorgegebenen Stufen stufenweise zu erhöhen, wenn in einer jeweiligen Stufe die Anzahl von Fehlauslösungen der Aktivschaltung in einer vorgegebenen Zeitdauer einen Fehlauslösungsschwellwert überschreitet. Das bedeutet, dass bei Überschreiten einer vorgegebenen Anzahl von Fehlauslösungen in vorgegebener Zeitdauer von der aktuellen Stufe in die nächsthöhere vorgegebene Stufe eingetreten wird. Die Definition der vorgegebenen Fehlauslösungen, der vorgegebenen Zeitdauer und der in den verschiedenen Stufen vorgesehenen Annäherungsparameterschwellwerte ist vorab bei Konfiguration des Steuerungssystems zu ermitteln, beispielsweise im Rahmen einer Abwägung von tolerierten Fehlauslösungen einerseits sowie durch Empfindlichkeitsreduktion in Kauf genommener Komforteinbuße individuell durch empirisches Vorgehen zu ermitteln. Hierfür können beispielsweise möglichst realitätsnahe Versuche durchgeführt werden, gegebenenfalls in Rückkopplung mit Testkunden. Für die vorliegende Entwicklung ist wesentlich, dass eine stufenweise Anpassung an verschiedene Situationen eingestellt werden kann, wohingegen die zielgenaue Einstellung verschiedener Parameter an jeweilige Situationen der Anpassung durch die Fachperson obliegt. Es kann vorgesehen sein, dass eine Anzahl von Stufen vorgegeben ist, beispielsweise zwischen 5 und 20 Stufen, die in der Wirkung verschiedene Empfindlichkeiten des Systems repräsentieren, und dass die Stufen in vorgegebener Reihenfolge eingenommen werden, gegebenenfalls bis irgendwann die höchste der Stufen erreicht wird. Dort kann sodann verblieben werden, bis wieder ein Zurückschalten in den Grundzustand erfolgt, der noch beschrieben werden wird.

Für den Fall, dass während eines vorgegebenen erkennungslosen Zeitraums, bevorzugt eines gleitenden vorgegebenen erkennungslosen Zeitraums, keine Annäherungen erkannt werden oder die Anzahl der erkannten Annäherungen einen vorgegebenen Marginalwert nicht überschreitet, kann der Annäherungsparameterschwellwert von der Radarsensoranordnung wieder auf seinen Grundwert zurückgesetzt werden. Beispielsweise kann eine Zurücksetzung auf den Grundwert vorgesehen sein, wenn für einen Mindestzeitraum, bevorzugt einen gleitenden Mindestzeitraum, der einen Wert zwischen 30 Minuten und 12 Stunden hat, nicht mehr als nur wenige, beispielsweise nicht mehr als 10, Annäherungen erkannt werden.

Alternativ kann auch vorgesehen sein, dass oder dass die Radarsensoranordnung ausgebildet ist, den Annäherungsparameterschwellwert in vorgegebenen Stufen stufenweise zu reduzieren, wenn in einer jeweiligen Stufe für einen vorgegebenen erkennungslosen Zeitraum eine Anzahl von erkannten Annäherungen Null nicht überschreitet oder einen vorgegebenen Marginalwert nicht überschreitet. Dies hat gegenüber dem sofortigen Rücksetzen auf den Grundzustand den Vorteil eines stabileren Verhaltens und erlaubt beispielsweise die Wahl von weniger langen vorgegebenen erkennungslosen Zeiträumen.

In einer Ausführung des Steuerungssystems kann vorgesehen sein, dass die Radarsensoranordnung eine Mehrzahl von Sendeantennen und eine Mehrzahl von Empfangsantennen aufweist, wobei die Radarsensoranordnung ausgebildet ist, im Energiesparmodus nur eine Untermenge der vorhandenen Sendeantennen und Empfangsantennen anzusteuern, bevorzugt jeweils genau eine Sendeantenne und genau eine Empfangsantenne. Auf diese Weise wird mit einfachen Maßnahmen eine gleichwohl wirksame Einsparung des Energiebedarfs erreicht.

Um in einem Fall, in dem aufgrund einer gegenwärtigen Fahrzeugsituation die Erkennungsempfindlichkeit gering gesetzt wurde, dass also die Mindestanzahl von erkannten Annäherungen und/oder der Annäherungsparameterschwellwert auf einer hohen Stufe eingestellt ist, eine zügige Gestenerkennung zu erlauben, kann die Radarsensoranordnung ausgebildet sein, in Reaktion auf ein Rücksetzsignal die Mindestanzahl von erkannten Annäherungen und/oder der Annäherungsparameterschwellwert jeweils auf ihren Grundwert zurückzusetzen. Das Rücksetzsignal kann beispielsweise vom fahrzeugseitigen, mit der Radarsensoranordnung gekoppelten Steuergerät ausgegeben werden, beispielsweise in Reaktion auf den Erhalt eines entsprechenden Signals eines, beispielsweise als Funkschlüssel oder Smartphone ausgebildeten, Identifikationsgebers, der zur Ausgabe des entsprechenden Signals eingerichtet ist und von dem Bediener betätigt wurde.

Um nach dem Eintritt in den Gestenerfassungsmodus wieder in den Energiesparmodus einzutreten, können unterschiedliche Varianten vorgesehen sein. Beispielsweise kann die Radarsensoranordnung eingerichtet sein, in den Energiesparmodus einzutreten, wenn sie über einen vorgegebenen Zeitraum, bevorzugt einen gleitenden vorgegebenen Zeitraum, beispielsweise einem Zeitraum zwischen 1 Minuten und 10 Stunden, bevorzugt zwischen 5 Minuten und 5 Stunden, keine Gestenerfassung erfolgreich beendet hat, also keine zur Auslösung des Verstellens der Fahrzeugklappe oder Fahrzeugtür vorgesehene Geste vor dem Radarsensor ausgeführt wurde. Alternativ oder zusätzlich kann vorgesehen sein, dass die Radarsensoranordnung eingerichtet ist, in den Energiesparmodus einzutreten, wenn das fahrzeugseitige Steuergerät ihr ein entsprechendes Energiesparmoduseintrittssignal übermittelt, beispielsweise in Abhängigkeit von einem Fahrzeugzustand wie insbesondere einem Überschreiten einer Mindestgeschwindigkeit, oder in Abhängigkeit von der Übermittlung einer vom Bediener ausgelösten Anforderung des Energiesparmodus, beispielsweise über ein Signal eines entsprechend eingerichteten Identifikationsgebers, bei dem es sich beispielsweise um einen Funkschlüssel oder um ein Smartphone handeln kann, das mit einer App zur Bedienung des betreffenden Fahrzeugs zur Anforderung des Energiesparmodus ausgerüstet ist. Auch ein Uhrzeitabhängiger Eintritt in den Energiesparmodus kann vorgesehen sein. Bevorzugt ist der Energiesparmodus aber der Grundzustand der Radarsensoranordnung und wird unmittelbar nach einer Gestenerkennung oder nach einem, bevorzugt gleitenden, Zeitraum zwischen 30 Sekunden und 5 Minuten ohne Gestenerkennung automatisch wieder eingenommen.

In einer Ausführungsform ist der Gestenerfassungsraum auf der Rückseite des Fahrzeugs zwischen der Stoßstangenunterkante und der Bodenebene orientiert, sodass die Steuergeste als Fußkick ausgeführt werden kann. Die Radarsensoranordnung dient sodann als Kicksensor, wobei die Steuereinrichtung nach Erfassung einer entsprechenden Steuergeste ein Signal an den mit der als Kofferraumklappe ausgebildeten Fahrzeugklappe gekoppelten Elektromotor ausgibt, um die Fahrzeugklappe zwischen einer geschlossenen Stellung und einer geöffneten Stellung zu verstellen.

Die Positionierung des Groberfassungsraums kann fachmännisch getroffen werden. Insbesondere kann bei einer, beispielsweise aufgrund der Positionierung der Radarsensoranordnung zur Erfassung der Steuergeste als Fußkick, gegebenen Anordnung der Radarsensoranordnung am Fahrzeug diejenige Kombination aus einer Sendeantenne und einer Empfangsantenne für die alleinige Ansteuerung im Energiesparmodus gewählt werden, die die am weitesten vom Fahrzeug beabstandete Annäherungserfassung erlaubt.

Ein Gedanke der Erfindung betrifft ein Verfahren zum berührungslosen Verstellen einer Fahrzeugklappe oder Fahrzeugtür eines Kraftfahrzeugs.

Mit der Fahrzeugklappe beziehungsweise Fahrzeugtür ist ein Elektromotor gekoppelt, und an dem Kraftfahrzeug ist eine Radarsensoranordnung angeordnet zur Erfassung von Objekten und von Steuergesten. Eine mit der Radarsensoranordnung und dem Elektromotor gekoppelte Steuereinrichtung ist ebenfalls an dem Kraftfahrzeug angeordnet. Zur Umsetzung des Verfahrens kann beispielsweise ein eingangs beschriebenes Steuerungssystem zum berührungslosen Verstellen einer Fahrzeugklappe oder Fahrzeugtür eines Kraftfahrzeugs, oder eine der erläuterten Weiterbildungen eines solchen Steuersystems, genutzt werden.

Das Verfahren umfasst die folgenden Verfahrensschritte:
a) Betreiben der Radarsensoranordnung in einem Energiesparmodus,
b) nach Detektion einer Annäherung eines Objekts in einen Groberfassungsraum für eine vorgegebene Mindestanzahl von erkannten Annäherungen und/oder eines Überschreitens eines Annäherungsparameterschwellwerts durch einen von der Radarsensoranordnung erfassten Annäherungsparameter: Aktivschaltung der Radarsensoranordnung von dem Energiesparmodus in einen Gestenerfassungsmodus hinein zur Bereitschaft einer Erfassung einer in einem Gestenerfassungsraum ausgeführten Steuergeste,
c) wenn innerhalb eines vorgegebenen Erfassungszeitraums eine hinterlegte Steuergeste erkannt wird, Ansteuern des Elektromotors mittels der Steuereinrichtung zum Verstellen einer Fahrzeugklappe oder Fahrzeugtür, anderenfalls Registrieren der Aktivschaltung als Fehlauslösung der Aktivschaltung.

Wenn die Radarsensoranordnung beispielsweise ein Radarsensor ist, wie er als kompaktes Modul einbaubereit marktverfügbar ist, kann die Auswertung der Steuergeste beispielsweise in einer fahrzeugseitigen Steuerungsvorrichtung, beispielsweise einem zentralen Steuergerät oder der oben genannten Steuereinrichtung erfolgen. Die zum Abgleich der Steuergeste erforderliche hinterlegte Steuergeste kann beispielsweise in einem Speichermittel der fahrzeugseitigen Steuerungsvorrichtung, beispielsweise des zentralen Steuergeräts oder der oben genannten Steuereinrichtung, gespeichert sein.

Wenn die Radarsensoranordnung eine als Modul bereitgestellte Einheit aus einem Radarsensor und einer Auswerteeinheit ist, die beispielsweise als Mikrocontroller ausgebildet ist, kann die Auswertung der Steuergeste beispielsweise in dem Mikrocontroller erfolgen. Die zum Abgleich der Steuergeste erforderliche hinterlegte Steuergeste kann beispielsweise in einem Speicherbereich des Mikrocontrollers gespeichert sein.

Wenn die Radarsensoranordnung alternativ als eine Kopplung oder eine Einheit aus zwei oder mehr Radarsensoren ausgebildet ist, insbesondere mit einer eigenen Auswerteeinheit, kann die Auswertung der Steuergeste in dieser Auswerteeinheit erfolgen. Die zum Abgleich der Steuergeste erforderliche hinterlegte Steuergeste kann beispielsweise in einem Speichermittel der Auswerteeinheit gespeichert sein.

Wenn die Radarsensoranordnung alternativ als Einheit aus zwei oder mehr Radarsensoren zur Ankopplung an eine übergeordnete Auswerteeinheit ausgebildet ist, kann die Auswertung der Steuergeste in der übergeordneten Auswerteeinheit erfolgen, beispielsweise einem zentralen Steuergerät des Fahrzeugs. Die zum Abgleich der Steuergeste erforderliche hinterlegte Steuergeste kann beispielsweise in einem Speichermittel der übergeordneten Auswerteeinheit gespeichert sein.

Bevorzugt ist vorgesehen, dass Mindestanzahl von erkannten Annäherungen erhöht wird, wenn die Anzahl von Fehlauslösungen der Aktivschaltung in einer vorgegebenen Zeitdauer einen Fehlauslösungsschwellwert überschreitet.

Gemäß einer Weiterbildung ist vorgesehen, dass die Aktivschaltung der Radarsensoranordnung erfolgt erst nach Detektion des Annäherungsparameters oberhalb des Annäherungsparameterschwellwerts, wobei der Annäherungsparameterschwellwert erhöht wird, wenn die Anzahl von Fehlauslösungen der Aktivschaltung in einer vorgegebenen Zeitdauer einen Fehlauslösungsschwellwert überschreitet.

Ein weiterer Gedanke der Erfindung betrifft ein Kraftfahrzeug, das eine Fahrzeugklappe und/oder eine Fahrzeugtür aufweist sowie ein Steuerungssystem der eingangs genannten Weise oder eines seiner Weiterbildungen aufweist.

Bevorzugt ist das Kraftfahrzeug und die Fahrzeugklappe und/oder eine Fahrzeugtür nicht Bestandteil des Steuerungssystems, aber mit der Anordnung des Steuersystems im und am Kraftfahrzeug sowie mit der Kopplung des Elektromotors mit der Fahrzeugklappe und/oder Fahrzeugtür wird das berührungslose Verstellen der Fahrzeugklappe beziehungsweise der Fahrzeugtür ermöglicht.

Weitere Einzelheiten, Merkmale und Vorteile des erfindungsgemäßen Steuerungssystems ergeben sich aus der nachfolgenden Beschreibung in Zusammenhang mit den Figuren, in denen beispielhaft ein Ausführungsbeispiel der Erfindung dargestellt ist.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind. Es zeigen:
Fig. 1: ein Ausführungsbeispiel eines erfindungsgemäßen Steuerungssystems;
Fig. 2: das Ausführungsbeispiel des erfindungsgemäßen Steuerungssystems der Fig. 1 in einer Umgebungssituation mit hoher Objektdichte;
Fig. 3: Schematische Darstellung des Erhöhens des Annäherungsparameterschwellwerts.

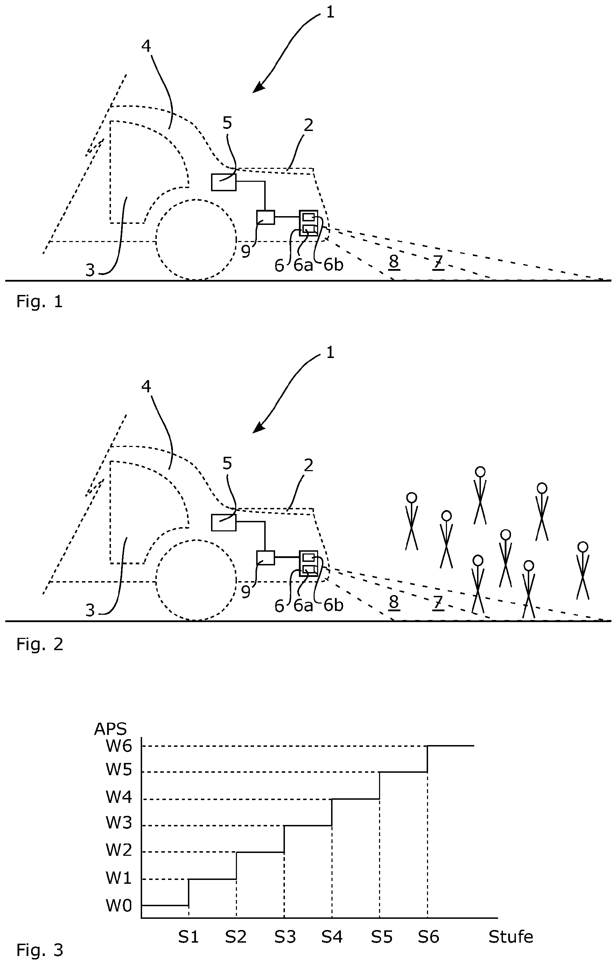

In Fig. 1 ist ein Ausführungsbeispiel eines erfindungsgemäßen Steuerungssystems 1 dargestellt. Das Steuerungssystem 1 dient dazu, eine Fahrzeugklappe 2 oder Fahrzeugtür 3 eines Kraftfahrzeugs 4 berührungslos zu verstellen. In Fig. 1 ist dies anhand des Beispiels der als Kofferraumklappe ausgebildeten Fahrzeugklappe 2 dargestellt.

Am Fahrzeug ist ein Elektromotor 5 vorgesehen, der mit der als Kofferraumklappe ausgebildeten Fahrzeugklappe 4 gekoppelt ist.

Am Fahrzeug 4 ist ferner eine Radarsensoranordnung 6 zur Erfassung von Objekten angeordnet. Die Radarsensoranordnung 6 ist im dargestellten Ausführungsbeispiel als eine kompakte Gesamtheit aus Radarsensor 6a und als mit dem Radarsensor 6a gekoppeltem Mikrocontroller ausgebildeter Auswerteeinheit 6b ausgeführt. In der gezeigten Darstellung ist die Orientierung der in der Abbildung nicht gezeigten Sende- sowie Empfangsantennen in dem Radarsensor 6a derart, dass eine Gestenerfassung im Gestenerfassungsmodus erfolgen kann, wenn die Geste innerhalb des Gestenerfassungsraums 7 stattfindet. Im Gestenerfassungsmodus arbeitet der Radarsensor 6a mit seiner vollen zeitlichen und räumlichen Auflösung, wozu insbesondere der Betrieb der meisten oder aller der in dem Radarsensor 6a vorhandenen Sende- und Empfangsantennen genutzt wird. Dadurch wird die bestmögliche Erfassung einer Kickbewegung ermöglicht, die Voraussetzung für die Auswertung des Verlaufs der Kickbewegung und folglich für die Entscheidung ist, ob ein in Abhängigkeit von einer erkannten als Kickbewegung ausgeführten Geste ein Ausgabesignal ausgegeben wird. Mit der Radarsensoranordnung 6 und dem Elektromotor 5 gekoppelt ist eine Steuereinrichtung 9, bei der es sich um eine dezidierte Öffnungssteuerung handeln kann, die alternativ aber auch durch die zentrale Fahrzeugsteuerung bereitgestellt werden kann. Die Steuereinrichtung 9 ist ausgebildet, ein entsprechend der obigen Erläuterung in Abhängigkeit von der innerhalb des Gestenerfassungsraums 7 ausgeführten und von der Radarsensoranordnung 6 in dem Gestenerfassungsmodus erfassten Steuergeste ausgegebenes Ausgabesignal zu erkennen. Wenn die Steuereinrichtung 9 das Ausgabesignal erkennt, veranlasst sie infolge des Erhalts des Ausgabesignals das Verstellen der Fahrzeugklappe, also beispielsweise das Öffnen der Fahrzeugklappe oder das Schließen der Fahrzeugklappe, das sodann mittels des Elektromotors 5 durchgeführt wird.

Um den Energiebedarf des Steuerungssystems 1 gering zu halten, weist die Radarsensoranordnung 6 wenigstens zwei Betriebsmodi auf. Neben dem Gestenerfassungsmodus weist das Steuerungssystem 1 einen Energiesparmodus auf. Beispielsweise kann der in der Radarsensoranordnung 6 enthaltene Radarsensor 6a eine Mehrzahl von Sendeantennen und eine Mehrzahl von Empfangsantennen aufweisen, was für eine zeit- und ortsaufgelöste Datengewinnung von Vorteil und bei marktüblichen Radarsensoren der Standard ist. Bei einem solchen Radarsensor 6a kann beispielsweise der Energiesparmodus vorsehen, dass nur eine Untermenge der vorhandenen Sendeantennen und Empfangsantennen angesteuert wird, bevorzugt jeweils genau eine Sendeantenne und genau eine Empfangsantenne. Dadurch wird der Energiebedarf des Gesamtsystems deutlich reduziert, aber für eine Groberkennung zur Gewinnung der Information darüber, ob eine Annäherung eines Objekts stattfindet, beispielsweise eine Annäherung eines potentiellen Bedieners mit dem Ziel, eine Klappenverstellung herbeizuführen, ist der Betrieb nur der Untermenge von Antennen bei geeigneter, für die Fachperson durch simples Probieren leicht möglicher, Positionierung der Radarsensoranordnung ausreichend. Diesen Umstand macht die vorliegende Entwicklung sich zu Nutze, um ohne merkliche Komforteinbußen eine signifikante Reduktion des Energiebedarfs zu erreichen.

Die Radarsensoranordnung wird dazu in Situationen, in denen der Bedarf nach einer Gestenerkennung weniger wahrscheinlich ist, in einen Energiesparmodus geschaltet. Der Energiesparmodus kann dabei der Standardmodus sein, da davon auszugehen ist, dass Zeiträume mit einem Bedarf nach Klappenverstellung nur einen kleinen Anteil der Gesamtzeit einnehmen.

Aus dem Energiesparmodus heraus kann die Radarsensoranordnung 6 in den Gestenerfassungsmodus hinein umgeschaltet werden. Die Umschaltung erfolgt in Abhängigkeit von im Energiesparmodus aus einem Groberfassungsraum 8 heraus erfassten Radarantworten. Auch im Energiesparmodus erfolgt also die kontinuierliche oder nicht kontinuierliche, in gewissen regelmäßigen oder unregelmäßigen Zeitabständen vorgenommene, Erfassung der Umgebung mit Radarwellen. Diese erfolgt, indem wiederholt Radarsignale emittiert werden und die reflektierten Radarwellen, also die Radarantwort, empfangen werden. Diese Radarüberwachung im Energiesparmodus kann mit reduzierter Antennenanzahl erfolgen, also beispielsweise genau einer Sendeantenne und einer Sendeantenne, außerdem kann zusätzlich eine Radarabfrage der Umgebung mit verringerter Frequenz erfolgen, beispielsweise mit einer Frequenz von bis zu 5 Abfragen pro Sekunde oder sogar noch geringer von bis zu 1 Abfrage pro Sekunde.

Die Radarsensoranordnung 6 ist zudem dazu ausgebildet, in den Gestenerfassungsmodus aktiv geschaltet zu werden, nachdem eine Detektion einer Annäherung eines Objekts in den Groberfassungsraum 8 hinein erfolgt ist.

Um zu verhindern, dass die Aktivschaltung zu hohe Fluktuationen zeigt, ist bevorzugt ein Annäherungsparameterschwellwert festgelegt, der von einem kontinuierlich oder nicht kontinuierlich regelmäßig überwachten Annäherungsparameter überschritten werden muss, damit die Aktivschaltung vorgenommen wird.

Dieser Annäherungsparameter kann beispielsweise eine Annäherungssignalstärke sein oder alternativ eine Zeitdauer sein, während welcher eine Annäherungssignalstärkenschwellwertüberschreitung stattfindet, das heißt: eine Mindestzeitdauer, während welcher ein Schwellwert einer Annäherungssignalstärke wenigstens kontinuierlich überschritten sein muss, muss einen festgelegten Schwellwert der Zeitdauer überschreiten, um eine Aktivschaltung zu ermöglichen. Auch eine von einer oder beider dieser beiden Werte abgeleitete Bedingung kann als zu überschreitender Annäherungsparameter gefordert werden.

Um zu erreichen, dass das Fahrzeug und die Bedienbarkeit des Fahrzeugs ebenso wie der Energiespareffekt des Fahrzeugs auch bei stark geänderten Umgebungsverhältnissen beibehalten werden, ist der Annäherungsparameterschwellwert in einer Ausführungsform veränderlich.

Beispielsweise wird es in einer Situation, wie sie in Fig. 2 dargestellt ist, häufig vorkommen, dass eine Aktivschaltung der Radarsensoranordnung 6, ohne dass jedoch eine in den Groberfassungsraum eintretende Person tatsächlich die Intention hat, eine Öffnung der Klappe herbeizuführen. Um in solchen Fällen eine übermäßig häufige Aktivschaltung der Radarsensoranordnung 6, stets einhergehend mit einem erhöhten Energiebedarf, zu vermeiden, ist die Radarsensoranordnung 6 in dem gezeigten Ausführungsbeispiel ausgebildet, den Annäherungsparameterschwellwert zu erhöhen, wenn die Anzahl von Fehlauslösungen der Aktivschaltung in einer vorgegebenen Zeitdauer einen Fehlauslösungsschwellwert überschreitet.

Das Erhöhen des Annäherungsparameterschwellwerts erfolgt in der gezeigten Ausführungsform derart, wie es in Fig. 3 dargestellt ist. Der Annäherungsparameterschwellwert, in den Koordinaten der Fig. 3 als "APS" abgekürzt, wird in vorgegebenen Stufen stufenweise erhöht, wenn in einer jeweiligen Stufe die Anzahl von Fehlauslösungen der Aktivschaltung in einer vorgegebenen Zeitdauer einen Fehlauslösungsschwellwert überschreitet. Das heißt, wenn beispielsweise in der gegenwärtig eingenommenen Stufe in einer gegebenen Zeitdauer T die Anzahl n von Fehlauslösungen einen Fehlauslösungsschwellwert überschreitet, wird der Annäherungsparameterschwellwert auf die nächste Stufe hochgesetzt. Ausgehend von einem Grundzustand WO nimmt er nach einem ersten Hochsetzen den Wert W1 in der Stu8fe S1 ein, und so weiter so lange, bis mit dem Wert W6 die im Ausführungsbeispiel höchste vorgesehene Stufe S6 erreicht worden ist. In der Fig. 6 ist ein bevorzugtes Ausführungsbeispiel vorgesehen, gemäß welchem die Werte WO bi W6 auf linearer Skala äquidistant verändert werden; es sind aber auch Ausführungsformen möglich, die eine nicht äquidistante Veränderung vorsehen. Die Radarsensoranordnung kann dabei ausgebildet ist, den Annäherungsparameterschwellwert wieder auf seinen Grundwert zurückzusetzen, wenn für einen vorgegebenen erkennungslosen Zeitraum eine Anzahl von erkannten Annäherungen Null nicht überschreitet oder einen vorgegebenen Marginalwert nicht überschreitet.

Beispielsweise kann dann, wenn der Annäherungsparameter eine Zeitdauer einer Annäherungssignalstärkenschwellwertüberschreitung ist, bei Platzieren des Fahrzeugs in einer Menschenmenge sich die Situation ergeben, dass der Annäherungssignalstärkenschwellwert, also ein vorgegebener Schwellwert der Annäherungssignalstärke auch ohne Betätigungsintention vergleichsweise häufig auch für ausreichend lange Zeitdauern überschritten wird, um den festgelegten Schwellwert für die Zeitdauer, also den Annäherungsparameterschwellwert, zu überschreiten, was wiederum zur Folge hat, dass ohne Betätigungsintention eine Aktivschaltung der Radarsensoranordnung 6 von dem Energiesparmodus in den Gestenerfassungsmodus erfolgt. In der beschriebenen Situation wird in den meisten Fällen auf die Aktivschaltung der Radarsensoranordnung 6 folgend keine Gestenerfassung benötigt, da die Annäherung nicht von einem Bediener des Fahrzeugs 4 erfolgte, sondern von zufällig passierenden Personen aus der vergleichsweise dichten Personenmenge. Die Aktivschaltung der Radarsensoranordnung 6 mit einem darauffolgenden vorgegebenen Zeitraum einer Nichterkennung einer Steuergeste wird von der Radarsensoranordnung 6 als Fehlauslösung bewertet und entsprechend registriert. Die Anzahl der Fehlauslösungen pro Zeiteinheit, bevorzugt pro rollierender Zeiteinheit, d. h. die Anzahl der Fehlauslösungen innerhalb des vergangenen stets gleich langen Zeitraums, wird von der Radarsensoranordnung 6 registriert. Für den Fall, dass die Radarsensoranordnung 6 feststellt, dass die Anzahl von Fehlauslösungen der Aktivschaltung in einer vorgegebenen Zeitdauer einen Schwellwert, den sogenannten Fehlauslösungsschwellwert, überschreitet, wird als erforderlich angesehen, die Empfindlichkeit des Systems zu reduzieren. Die Empfindlichkeit der Aktivschaltung wird dabei insbesondere dadurch reduziert, dass beispielsweise der Schwellwert der Annäherungssignalstärke oder, wie im oben beschriebenen Fall, der Schwellwert für die Zeitdauer der Annäherungssignalstärkenschwellwertüberschreitung und/oder ein von einer oder beider der beiden Größen abhängiger Zusammenhang erhöht wird. Diese Vorgehensweise erfolgt bevorzugt in Stufen, sodass sequenziell eine zunehmende Reduktion der Empfindlichkeit des Systems stattfindet, und zwar bis zu einem Zeitpunkt, an dem ein Kriterium für das Zurücksetzen vorliegt, beispielsweise wenn während eines vorgegebenen Zeitraums eine Anzahl von erkannten Annäherungen 0 ist oder einen vorgegebenen Marginalwert nicht überschreitet. In dem Fall, dass für einen vorgegebenen erkennungslosen Zeitraum in dem Groberfassungsmodus keine Annäherung eines Objekts oder nur sehr wenige Annäherungen eines Objekts verzeichnet werden, wird die Empfindlichkeit somit wieder auf ihren Grundwert eingestellt, da im Rahmen der vorliegenden Entwicklung dies mit der Annahme einhergeht, dass die Fahrzeugsituation wieder in einem regulären, nicht außergewöhnlichen Zustand ist, beispielsweise durch ein Verlassen einer Position mit hoher Menschenmenge und einnehmen einer Position ohne hohe Menschenmenge.

## Patentansprüche

1. Steuerungssystem (1) zum berührungslosen Verstellen einer Fahrzeugklappe (2) oder Fahrzeugtür (3) eines Kraftfahrzeugs (4),
aufweisend
einen mit der Fahrzeugklappe (2) beziehungsweise Fahrzeugtür (3) gekoppelten Elektromotor (5),
eine Radarsensoranordnung (6) zur Erfassung von Objekten,
eine mit der Radarsensoranordnung (6) und dem Elektromotor (5) gekoppelte Steuereinrichtung (9), wobei die Steuereinrichtung (9) ausgebildet ist, in Abhängigkeit von einer innerhalb eines Gestenerfassungsraums (7) ausgeführten und von der Radarsensoranordnung (6) in einem Gestenerfassungsmodus erfassten Steuergeste das Verstellen der Fahrzeugklappe (2) beziehungsweise Fahrzeugtür (3) mittels des Elektromotors (5) zu veranlassen,
wobei die Radarsensoranordnung (6) wenigstens zwei Betriebsmodi, nämlich den Gestenerfassungsmodus sowie einen Energiesparmodus einnehmen kann,
wobei die Radarsensoranordnung zur Aktivschaltung in den Gestenerfassungsmodus eingerichtet ist, in Abhängigkeit von im Energiesparmodus aus einem Groberfassungsraum (8) heraus erfassten Radarantworten von dem Energiesparmodus in den Gestenerfassungsmodus hinein zu wechseln.

2. Steuerungssystem (1) nach Anspruch 1, **dadurch gekennzeichnet, dass** die Radarsensoranordnung (6) ausgebildet ist, die Aktivschaltung in den Gestenerfassungsmodus nach Detektion einer Annäherung eines Objekts in den Groberfassungsraum (8) hinein vorzunehmen.

3. Steuerungssystem (1) nach Anspruch 1 oder nach Anspruch 2, **dadurch gekennzeichnet, dass** die Radarsensoranordnung (6) ausgebildet ist, die Aktivschaltung nach Detektion einer Mindestanzahl von erkannten Annäherungen vorzunehmen.

4. Steuerungssystem (1) nach Anspruch 3, **dadurch gekennzeichnet, dass** die Mindestanzahl von erkannten Annäherungen veränderlich ist.

5. Steuerungssystem (1) nach Anspruch 4, **dadurch gekennzeichnet, dass** die Radarsensoranordnung (6) ausgebildet ist, die Mindestanzahl von erkannten Annäherungen zu erhöhen, wenn die Anzahl von Fehlauslösungen der Aktivschaltung in einer vorgegebenen Zeitdauer einen Fehlauslösungsschwellwert überschreitet.

6. Steuerungssystem (1) nach Anspruch 4 oder nach Anspruch 5, **dadurch gekennzeichnet, dass** die Radarsensoranordnung (6) ausgebildet ist, die Mindestanzahl von erkannten Annäherungen in vorgegebenen Stufen stufenweise zu erhöhen, wenn in einer jeweiligen Stufe die Anzahl von Fehlauslösungen der Aktivschaltung in einer vorgegebenen Zeitdauer einen Fehlauslösungsschwellwert überschreitet.

7. Steuerungssystem (1) nach einem der Ansprüche 3 bis 6, **dadurch gekennzeichnet, dass** die Radarsensoranordnung (6) ausgebildet ist, die Mindestanzahl von erkannten Annäherungen wieder auf ihren Grundwert zurückzusetzen, wenn für einen vorgegebenen erkennungslosen Zeitraum eine Anzahl von erkannten Annäherungen Null nicht überschreitet oder einen vorgegebenen Marginalwert nicht überschreitet,
oder dass die Radarsensoranordnung (6) ausgebildet ist, die Mindestanzahl von erkannten Annäherungen in vorgegebenen Stufen stufenweise zu reduzieren, wenn in einer jeweiligen Stufe für einen vorgegebenen erkennungslosen Zeitraum eine Anzahl von erkannten Annäherungen Null nicht überschreitet oder einen vorgegebenen Marginalwert nicht überschreitet.

8. Steuerungssystem (1) nach einem der vorhergehenden Ansprüche, **dadurch gekennzeichnet, dass** die Radarsensoranordnung (6) ausgebildet ist, die Aktivschaltung der Radarsensoranordnung (6) nach Detektion eines Annäherungsparameters oberhalb eines Annäherungsparameterschwellwerts vorzunehmen.

9. Steuerungssystem (1) nach Anspruch 8, **dadurch gekennzeichnet, dass** der Annäherungsparameterschwellwert veränderlich ist.

10. Steuerungssystem (1) nach Anspruch 9, **dadurch gekennzeichnet, dass** die Radarsensoranordnung (6) ausgebildet ist, den Annäherungsparameterschwellwert zu erhöhen, wenn die Anzahl von Fehlauslösungen der Aktivschaltung in einer vorgegebenen Zeitdauer einen Fehlauslösungsschwellwert überschreitet.

11. Steuerungssystem (1) nach Anspruch 9 oder nach Anspruch 10, **dadurch gekennzeichnet, dass** die Radarsensoranordnung (6) ausgebildet ist, den Annäherungsparameterschwellwert in vorgegebenen Stufen stufenweise zu erhöhen, wenn in einer jeweiligen Stufe die Anzahl von Fehlauslösungen der Aktivschaltung in einer vorgegebenen Zeitdauer einen Fehlauslösungsschwellwert überschreitet.

12. Steuerungssystem (1) nach einem der Ansprüche 8 bis 11, **dadurch gekennzeichnet,**
**dass** die Radarsensoranordnung (6) ausgebildet ist, den Annäherungsparameterschwellwert wieder auf seinen Grundwert zurückzusetzen, wenn für einen vorgegebenen erkennungslosen Zeitraum eine Anzahl von erkannten Annäherungen Null nicht überschreitet oder einen vorgegebenen Marginalwert nicht überschreitet,
oder dass die Radarsensoranordnung (6) ausgebildet ist, den Annäherungsparameterschwellwert in vorgegebenen Stufen stufenweise zu reduzieren, wenn in einer jeweiligen Stufe für einen vorgegebenen erkennungslosen Zeitraum eine Anzahl von erkannten Annäherungen Null nicht überschreitet oder einen vorgegebenen Marginalwert nicht überschreitet.

13. Steuerungssystem (1) nach einem der Ansprüche 8 bis 12, **dadurch gekennzeichnet, dass** Annäherungsparameter eine Annäherungssignalstärke ist oder der Annäherungsparameter eine Zeitdauer einer Annäherungssignalstärkenschwellwertüberschreitung ist oder der Annäherungsparameter eine von der Annäherungssignalstärke und/oder der Zeitdauer der Annäherungssignalstärkenschwellwertüberschreitung abgeleiteter Zusammenhang ist.

14. Steuerungssystem (1) nach einem der vorhergehenden Ansprüche, **dadurch gekennzeichnet, dass** die Radarsensoranordnung (6) eine Mehrzahl von Sendeantennen und eine Mehrzahl von Empfangsantennen aufweist, wobei die Radarsensoranordnung ausgebildet ist, im Energiesparmodus nur eine Untermenge der vorhandenen Sendeantennen und Empfangsantennen anzusteuern, bevorzugt jeweils genau eine Sendeantenne und genau eine Empfangsantenne.

15. Verfahren zum berührungslosen Verstellen einer Fahrzeugklappe (2) oder Fahrzeugtür (3) eines Kraftfahrzeugs (4),
wobei
mit der Fahrzeugklappe (2) beziehungsweise Fahrzeugtür (3) ein Elektromotor (5) gekoppelt ist,
und an dem Kraftfahrzeug (4) eine Radarsensoranordnung (6) zur Erfassung von Objekten sowie eine mit der Radarsensoranordnung (6) und dem Elektromotor (5) gekoppelte Steuereinrichtung (9) angeordnet sind,
umfassend die Verfahrensschritte:
a) Betreiben der Radarsensoranordnung (6) in einem Energiesparmodus,
b) nach Detektion einer Annäherung eines Objekts in einen Groberfassungsraum (8) für eine vorgegebene Mindestanzahl von erkannten Annäherungen und/oder eines Überschreitens eines Annäherungsparameterschwellwerts durch einen von der Radarsensoranordnung (6) erfassten Annäherungsparameter: Aktivschaltung der Radarsensoranordnung von dem Energiesparmodus in einen Gestenerfassungsmodus hinein zur Erfassung einer in einem Gestenerfassungsraum (7) ausgeführten Steuergeste,
c) wenn innerhalb eines vorgegebenen Erfassungszeitraums eine hinterlegte Steuergeste erkannt wird, Ansteuern des Elektromotors (5) mittels der Steuereinrichtung (9) zum Verstellen einer Fahrzeugklappe (2) oder Fahrzeugtür (3), anderenfalls Registrieren der Aktivschaltung als Fehlauslösung der Aktivschaltung.

16. Verfahren nach Anspruch 15, **dadurch gekennzeichnet, dass** die Mindestanzahl von erkannten Annäherungen und/oder der Annäherungsparameterschwellwerts erhöht wird, wenn die Anzahl von registrierten Fehlauslösungen der Aktivschaltung in einer vorgegebenen Zeitdauer einen Fehlauslösungsschwellwert überschreitet.

17. Verfahren nach Anspruch 15 oder nach Anspruch 16,
**dadurch gekennzeichnet, dass** die Aktivschaltung der Radarsensoranordnung (6) erfolgt nach Detektion des Annäherungsparameters oberhalb des Annäherungsparameterschwellwerts, wobei der Annäherungsparameterschwellwert erhöht wird, wenn die Anzahl von Fehlauslösungen der Aktivschaltung in einer vorgegebenen Zeitdauer einen Fehlauslösungsschwellwert überschreitet.

18. Kraftfahrzeug (4), aufweisend eine Fahrzeugklappe (2) und/oder eine Fahrzeugtür sowie ein Steuerungssystem (1) nach einem der Ansprüche 1 bis 14.
